# EUROPÄISCHE PATENTSCHRIFT

(11) **EP 0 806 551 B1**
(45) Veröffentlichungstag und Bekanntmachung des Hinweises auf die Patenterteilung: **14.06.2000**
(21) Anmeldenummer: 97106605.5
(22) Anmeldetag: 22.04.1997
(51) Int. Cl.: F01L 3/02, B23P 15/00

(54) **Herstellungsverfahren für ein nitriertes Bimetallventil**
Manufacturing process for nitrided bimetallic valve
Procédé de fabrication pour soupape bimétallique nitrurée

(30) Priorität: 08.05.1996 DE 19618477
(43) Veröffentlichungstag der Anmeldung: 12.11.1997
(73) Patentinhaber: TRW Deutschland GmbH, 30890 Barsinghausen (DE)
(72) Erfinder: Gutmann, Arbo, Dipl.-Ing., 78176 Blumberg (DE); Laudenberg, Hans-Josef, Dr.-Ing., 30890 Barsinghausen (DE); Linke, Axel. Dipl.-Ing., 31542 Bad Nenndorf (DE)
(74) Vertreter: Arendt, Helmut, Dipl.-Ing.

(56) Entgegenhaltungen:
- DE-A- 2 827 271
- TRW THOMPSON: "Ventile" TRW THOMPSON , September 1986, BARSINGHAUSEN (D), XP002061791

## Beschreibung

Die Erfindung betrifft ein Verfahren zur Herstellung eines nitrierten Bimetallventils für Verbrennungskraftmaschinen, dessen Kopfteil aus einem Werkstoff hoher Warmfestigkeit und Korrosionsbeständigkeit besteht und durch Reibschweißen mit dem Schaft aus einem härtbaren Ventilstahl verbunden ist, und das durch Nitrieren abschließend gehärtet wird.

Bei bekannten Ventilen der eingangs genannten Gattung besteht das Kopfteil (Ventilkopf und Schaftansatz) üblicherweise aus einem austenitischen Werkstoff (Stahl- oder Nickel-Basis-Legierung), während das Schaftstück aus einem ferritisch martensitischen Material gefertigt ist. Der Schaftbereich wird hierbei über die Reibschweißnaht hinweg durch mehrfaches Centerless-Schleifen bearbeitet und fertiggestellt. Der Schaft wird vielfach auch galvanisch verchromt und anschließend ebenfalls durch Centerless-Schleifen auf das Fertigmaß gebracht. An den Schaftdurchmesser sowie die Geradheit oder Zylindrizität des Schaftes werden hohe Anforderungen gestellt. Eine Fertigungsschwierigkeit besteht darin, den aus zwei unterschiedlichen Werkstoffen bestehenden Schaft gerade und absatzfrei zu schleifen. Diese Schwierigkeit wird dadurch umgangen, daß man den Absatz (Schweißnaht) überchromt und dann die Chromschicht gerade und absatzfrei schleift.

Neben der Verchromung können die Ventile nitriergehärtet werden, wobei sich an der Oberfläche sehr harte Verbindungs- oder Diffusionsschichten bilden. Beim vorteilhaften Plasmanitrieren wächst der Schaftdurchmesser nur in einem sehr geringen Maße, ohne die Form dabei zunächst zu verändern, da die Stickstoffionen in die Oberfläche hineindiffundieren, so daß keine zusätzliche Schicht, wie beispielsweise eine Chromschicht, von außen aufgetragen wird. Deshalb sieht man sich mit den vorgenannten Fertigungsschwierigkeiten in vollem Maße konfrontiert. Man ist daher gezwungen, mit viel Aufwand und zusätzlichen Schleifoperationen einen absatzfreien Schaft zu schleifen. Erschwerend zeigt sich dann jedoch, daß sich die beiden Werkstoffe eines Bimetallventils infolge des an der Oberfläche eindiffundierten Stickstoffs in den Durchmesser unterschiedlich stark verändern und damit selbst bei vorher geradem Schaft nach dem Nitrieren wieder ein Absatz entstanden ist. Um diesen zu beseitigen und damit die gestellten Anforderungen zu erfüllen, ist ein erneuter erheblicher Schleif- oder Polieraufwand erforderlich.

Ein weiteres Verfahren gemäß dem Oberbegriff des Anspruchs 1 ist aus dem Dokument DE 28 27 271 A bekannt.

Der Erfindung liegt die Aufgabe zugrunde, ein Herstellungsverfahren für nitrierte Ventile der eingangs genannten Gattung zu schaffen, das die Fertigung unter wirtschaftlichen Gesichtspunkten ermöglicht. Die Erfindung als Lösung dieser Aufgabe zeichnet sich durch folgenden Verfahrensschritt aus:

Reduzierung des Durchmessers des aus hochwarmfestem und korrosionsbeständigem Werkstoff bestehenden Teils des Schaftes gegenüber dem Durchmesser des aus einem härtbaren Ventilstahl bestehenden Schaftteils vor dem anschließendem Plasmanitrieren des in den übrigen Bereichen zuvor maßgeman hergestellten Ventils.

Vorzugsweise beträgt die Durchmesserreduzierung am Schaftstück des Kopfwerkstoffes bei einem erfindungsgemäß hergestellten Ventil 0,02 mm. Dadurch kommt nur der ferritisch martensitische Schaftteil in der Ventilführung zum Tragen, und die tragende Länge in der Führung reduziert sich um den abgesetzten austenitischen Teil, soweit dieser sich innerhalb der Führung im geschlossenen Zustand des Ventils befindet.

Üblicherweise und nach geltenden Konstruktionsempfehlungen werden Bimetallventile so ausgelegt, daß die Reibschweißverbindung im geschlossenen Zustand des Ventils etwa um den Betrag des halben Hubs innerhalb der Führung liegt, um diese vor Korrosion und Brüchen zu schützen. Mit der als Lösung gefundenen Änderung scheint das Gefährdungspotential für die Reibschweißnaht noch erhöht, weil das maximale Biegemoment vom Führungsende zur Reibschweißnaht hin verlagert wird. Außerdem können die Abgase leichter in die Führung bis in den Bereich der Reibschweißnaht gelangen.

Wider Erwarten haben jedoch Versuche gezeigt, daß es möglich ist, mit einem erfindungsgemäß hergestellten Ventil ausreichende Standzeiten und eine ausreichende Lebensdauer zu erreichen.

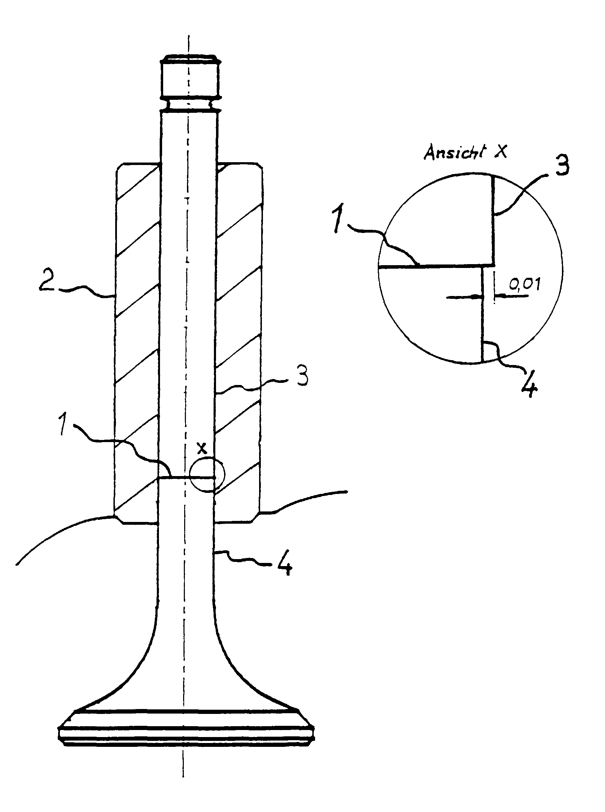

Die erzielbaren Vorteile zeigen sich deutlich an dem erheblich reduzierten Herstellungsaufwand und der damit erst erzielten Wirtschaftlichkeit der Fertigung plasmanitrierter Ventile. Damit ist dieses umweltfreundliche Verfahren auch auf Bimetallventile wirtschaftlich anwendbar. In der Zeichnung ist ein Ausführungsbeispiel eines erfindungsgemäß hergestellten Bimetallventils zusammen mit einer Ausschnittsvergrößerung schematisch dargestellt. Wie bei Bimetallventilen üblich, liegt die Reibschweißnaht 1 mindestens einen halben Ventilhub in der Ventilführung 2. Der Schaftteil 3 oberhalb der Reibschweißnaht übernimmt allein die Führung des Schaftes, da der kopfseitige Schaftteil 4 bei dem gezeigten Beispiel um 0,02 mm durch Schleifen im Durchmesser reduziert ist.

## Patentansprüche

1. Verfahren zur Herstellung eines nitrierten Bimetallventils für Verbrennungskraftmaschinen, dessen Kopfteil aus einem Werkstoff hoher Warmfestigkeit und Korrosionsbeständigkeit besteht und durch Reibschweißen mit dem Schaft aus einem härtbaren Ventilstahl verbunden ist und das durch Nitrieren abschließend gehärtet wird, gekennzeichnet durch folgenden Verfahrensschritt:
Reduzierung des Durchmessers des aus hochwarmfestem und korrosionsbeständigem Werkstoff bestehenden, zum Ventilkopf gehörenden Teils (4) des Schaftes gegenüber dem Durchmesser des aus einem härtbaren Ventilstahl bestehenden Schaftteils (3)
vor dem anschließenden Plasmanitrieren des in den übrigen Bereichen zuvor maßgenau hergestellten Ventils.

2. Verfahren nach Anspruch 1, dadurch gekennzeichnet, daß die Ventile durch spanende Bearbeitung vor dem Nitrieren maßgenau hergestellt werden.

3. Ventil hergestellt nach dem Verfahren nach Anspruch 1, dadurch gekennzeichnet, daß die in der Ventilführung tragende Länge des Schaftes hinsichtlich aller Anforderungen bezüglich Durchmessertoleranz, Geradheit und Zylindrizität allein auf den Schaftteil aus härtbarem Ventilstahl bezogen und die tragende Länge des Schaftes auf diesen Schaftteil (3) begrenzt ist.

4. Ventil nach Anspruch 3, dadurch gekennzeichnet, daß der Durchmesser des zum Kopfteil gehörenden Schaftteils (4) um maximal 0,5 mm kleiner ist als der Durchmesser des tragenden Schaftteils (3).

5. Ventil nach Anspruch 3 oder 4, dadurch gekennzeichnet, daß die Durchmesserreduzierung 0,02 mm beträgt.

6. Ventil nach einem der Ansprüche 3 bis 5, dadurch gekennzeichnet, daß das zum Kopfteil gehörende Schaftteil (4) aus einem austenitischen und der tragende Schaftteil (3) aus einem ferritisch martensitischen Werkstoff besteht.

## Claims

1. Method for producing a nitrided bimetal valve for internal combustion engines, the head part of which consists of a material of a high strength at high temperatures and corrosion resistance, is joined by friction welding to the stem, which consists of a hardenable valve steel, and is finally hardened by nitriding, characterised by the following method step:
Reducing the diameter of the part (4) of the stem consisting of a high-temperature and corrosion-resistant material and belonging to the valve head with respect to the diameter of the stem part (3) consisting of a hardenable valve steel before the subsequent plasma-nitriding of the valve previously produced with accurate dimensions in the other regions.

2. Method according to Claim 1, characterised in that the valves are produced with accurate dimensions by machining before nitriding.

3. Valve produced according to the method according to Claim 1, characterised in that the length of the stem having a bearing effect in the valve guide is related solely to the stem part of hardenable valve steel with regard to all requirements concerning diametrical tolerance, straightness and cylindricity, and the bearing length of the stem is restricted to this stem part (3).

4. Valve according to Claim 3, characterised in that the diameter of the stem part (4) belonging to the head part is smaller by at most 0.5 mm than the diameter of the bearing stem part (3).

5. Valve according to Claim 3 or 4, characterised in that the reduction in diameter is 0.02 mm.

6. Valve according to any one of Claims 3 to 5, characterised in that the stem part (4) belonging to the head part consists of an austenitic material and the bearing stem part (3) consists of a ferritic-martensitic material.

## Revendications

1. Procédé de fabrication d'une soupape bimétallique nitrurée pour des moteurs à combustion interne, dont la partie de tête est constituée d'un matériau d'une grande résistance aux températures élevées et à la corrosion et est reliée par soudage par friction à la tige en un acier de soupape durcissable, et qui est durcie ensuite par nitruration, caractérisé par l'étape de procédé suivante:
réduction du diamètre de la partie (4) de la tige faisant partie de la tête de soupape, constituée du matériau hautement résistant aux températures élevées et à la corrosion, par rapport au diamètre de la partie de tige (3) constituée d'un acier de soupape durcissable avant la nitruration suivante au plasma de la soupape fabriquée préalablement selon les dimensions prescrites dans les autres zones.

2. Procédé selon la revendication 1, caractérisé en ce que les soupapes sont fabriquées selon les dimensions précises par enlèvement des copeaux avant la nitruration.

3. Soupape fabriquée selon le procédé conformément à la revendication 1, caractérisée en ce que la longueur de la tige porteuse dans le guidage de la soupape se rapporte en ce qui concerne toutes les exigences se rapportant à la tolérance du diamètre, à l'allure rectiligne et cylindrique, uniquement à la partie de tige en acier de soupape durcissable, et que la longueur porteuse de la tige est limitée à cette partie de tige (3).

4. Soupape selon la revendication 3, caractérisée en ce que le diamètre de la partie de tige (4) faisant partie de la partie de tête est au maximum 0,5 mm plus petit que le diamètre de la partie de tige porteuse (3).

5. Soupape selon la revendication 3 ou 4, caractérisée en ce que la réduction du diamètre est de 0,02 mm.

6. Soupape selon l'une des revendications 3 à 5, caractérisée en ce que la partie de tige (4) faisant partie de la partie de tête est constituée d'un matériau austénitique et la partie de tige porteuse (3) d'un matériau ferritique martensitique.
